# FASCICULE DE BREVET EUROPEEN

(11) **EP 2 999 130 B1**
(45) Date de publication et mention de la délivrance du brevet: **16.12.2020**
(21) Numéro de dépôt: 15184263.0
(22) Date de dépôt: 08.09.2015
(51) Int. Cl.: H04B 5/00

(54) **PROCÉDÉ DE COMMUNICATION SANS CONTACT ENTRE DEUX DISPOSITIFS NFC AVEC RÉDUCTION DE L'IMPACT D'UNE ÉMISSION DE BRUIT EXTERNE**
KONTAKTLOSES KOMMUNIKATIONSVERFAHREN ZWISCHEN ZWEI NFC-GERÄTEN MIT REDUZIERUNG DES EINFLUSSES EINER EXTERNEN LÄRMEMISSION
METHOD FOR A CONTACTLESS COMMUNICATION BETWEEN TWO NFC DEVICES WITH IMPACT REDUCTION OF AN EXTERNAL NOISE EMISSION

(30) Priorité: 22.09.2014 FR 1458904
(43) Date de publication de la demande: 23.03.2016
(73) Titulaire: STMicroelectronics International N.V., 1118 BH Schiphol (NL)
(72) Inventeur: DHAYNI, Achraf, 06220 VALLAURIS (FR)
(74) Mandataire: Casalonga

(56) Documents cités:
- EP-A1- 2 009 790
- US-A1- 2008 036 573
- US-A1- 2010 309 957
- KIM SEUNGJIN ET AL: "A UHF-band RFID transmitter with spur reduction technique using a DLL-based spread-spectrum clock generator", 2014 IEEE RADIO FREQUENCY INTEGRATED CIRCUITS SYMPOSIUM, IEEE, 1 juin 2014 (2014-06-01), pages 393-396, XP032616026, ISSN: 1529-2517, DOI: 10.1109/RFIC.2014.6851750 ISBN: 978-1-4799-3862-9 [extrait le 2014-07-09]

## Description

Des modes de mise en œuvre et de réalisation de l'invention concernent la communication sans fil entre deux dispositifs, par exemple deux dispositifs NFC (« Near Field Communication »), par exemple un lecteur et un transpondeur du type étiquette (« tag », en langue anglaise) ou bien une carte à puce sans contact ou encore un téléphone mobile émulé en mode carte sans que ces exemples ne soient limitatifs, et plus particulièrement la réduction de l'impact de bruit provenant d'un dispositif tiers.

La communication champ proche, plus connue par l'homme du métier sous la dénomination anglosaxonne NFC (« Near Field Communication ») est une technologie de connectivité sans fil qui permet une communication sur une courte distance, par exemple 10 cm, entre des dispositifs électroniques, comme par exemple des cartes à puce sans contact ou des téléphones mobiles émulés en mode carte, et des lecteurs.

La technologie NFC est particulièrement adaptée pour connecter tout type de dispositif utilisateur et permet des communications rapides et faciles.

Un dispositif sans contact est un dispositif capable d'échanger des informations via une antenne avec un autre dispositif sans contact, par exemple un lecteur, selon un protocole de communication sans contact.

Un dispositif NFC, qui est un dispositif sans contact, est un dispositif compatible avec la technologie NFC.

La technologie NFC est une plate-forme technologique ouverte normalisée dans la norme ISO/IEC 18092 et ISO/IEC 21481 mais incorpore de nombreuses normes déjà existantes comme par exemple les protocoles type A et type B définis dans la norme ISO-14443 qui peuvent être des protocoles de communication utilisables dans la technologie NFC.

Outre sa fonction classique de téléphone, un téléphone mobile cellulaire peut être utilisé (s'il est équipé de moyens spécifiques) pour échanger des informations avec un autre dispositif sans contact, par exemple un lecteur sans contact, en utilisant un protocole de communication sans contact utilisable dans la technologie NFC.

Ceci permet d'échanger des informations entre le lecteur sans contact et des éléments sécurisés situés dans le téléphone mobile. De nombreuses applications sont ainsi possibles comme la billetterie mobile dans les transports publics (le téléphone mobile se comporte comme un ticket de transport) ou bien le paiement mobile (le téléphone mobile se comporte comme une carte de paiement).

Différents circuits électroniques peuvent être intégrés de façon compacte et cohabiter sur la même puce ou coexister sur le même appareil ou plateforme. Ces circuits partagent le même substrat, les mêmes signaux, les mêmes signaux d'alimentation ainsi que les mêmes arborescences de signaux d'horloge.

Il en résulte des couplages électromagnétiques parasites qui doivent être pris en compte dans la conception des circuits intégrés.

Par ailleurs, la non linéarité intrinsèque des dispositifs actifs analogiques et numériques provoquent des perturbations hors bande (principalement des harmoniques d'ordre élevé), ce qui provoque une sévère distorsion en particulier dans les autres signaux analogiques désirés ainsi que des erreurs de décalage de tension ou de courant continu sur des nœuds sensibles dans le circuit victime, conduisant pour ce dernier à un mode de fonctionnement non correct.

A titre d'exemple, un dispositif NFC peut coexister et cohabiter sur une même plateforme électronique avec d'autres dispositifs tels que des dispositifs radio opérant dans la bande FM, des dispositifs GPS, Bluetooth, et des stations de réseaux locaux sans fil (WLAN : « Wireless Local Area Network »).

De ce fait, le dispositif NFC peut être la victime de plusieurs émissions de bruit parasites provenant du couplage électromagnétique avec des agresseurs situés sur la même puce que le dispositif NFC, tel que le dispositif radio FM, GPS, Bluetooth ou WLAN.

Un tel couplage électromagnétique peut se produire entre l'antenne de l'agresseur et l'antenne du dispositif NFC (victime) ou entre certains signaux de l'agresseur et d'autres signaux de la victime, en particulier des signaux qui empruntent de longs chemins comme les arborescences de signaux d'horloge.

Le dispositif NFC peut également être victime d'émissions de bruit par un couplage électromagnétique avec des agresseurs qui se situent en dehors de la puce sur laquelle est situé le dispositif NFC, mais sur la même carte de circuit imprimé et la même plateforme. De tels agresseurs peuvent être par exemple des modules d'alimentation, des générateurs de signaux d'horloge, des synthétiseurs de fréquence...

Des filtres communément désignés par l'homme du métier sous le vocable filtres « EMC » (« Electro Magnetic Compatibility ») sont utilisés pour réduire « l'agressivité » d'un dispositif NFC à l'encontre d'autres victimes, mais non pour réduire « l'agressivité » d'autres dispositifs à l'encontre de la victime NFC.

Le document US 2008/036573 A1 décrit un système CDMA-RFID utilisant une modulation à code étalé dans un système comprenant un interrogateur et plusieurs transpondeurs radiofréquence.

Le transpondeur radiofréquence reçoit un signal de l'interrogateur et génère un signal de synchronisation basé sur un signal d'interrogation reçu par le transpondeur. Le transpondeur comporte par ailleurs un modulateur à code étalé et un transmetteur qui transmet un signal de réponse incluant une information modulée par code étalé basée sur le signal de synchronisation à un intervalle de transmission aléatoire.

L'article de Kim Seungjin et autres intitulé « A UHF-band RFID transmitter with Spur Réduction Technique using a DDL-based Spread-Spectrum Clock Generator" 2014 IEEE Radio Frequency Integrated Circuits Symposium, IEEE 1er juin 2014 page 393-396 décrit un transmetteur RFID dans la bande UHF avec une technique robuste de réduction de bruit utilisant une boucle à verrouillage numérique basée sur un signal d'horloge à spectre étalé.

Le document EP 2009790 A1 décrit une méthode d'accord de la fréquence de résonance d'un circuit résonant comportant un élément inductif servant d'antenne d'un dispositif d'émission/réception d'un système de transmission en champ proche sur la fréquence d'émission/réception du dispositif d'émission/réception.

Dans cette méthode, on mesure le déphasage que subit, dans le circuit résonant, le signal modulé à transmettre ou le signal dans ledit élément actif à la réception de signaux de transmission et on modifie la fréquence de résonance du circuit résonant lorsque le déphasage ainsi mesuré n'est pas nul, et ce, de manière à annuler ledit déphasage.

Le document US 2010/039957 A1 décrit un système et un procédé pour réduire la cyclo-stationnarité et la densité d'énergie dans un canal de communication de données à spectre étalé chaotique en générant une séquence chaotique de valeurs pour former un code étalé. Le code étalé est utilisé pour former un signal numérique à spectre étalé ayant un intervalle d'échantillonnage uniforme. La durée de l'intervalle d'échantillonnage varie sélectivement selon une séquence aléatoire introduisant ainsi une dispersion connue dans le signal analogique à spectre étalé.Selon un mode de mise en œuvre et de réalisation, il est proposé de réduire l'agressivité de tout agresseur à l'encontre d'un dispositif NFC qui est alors considéré comme la victime, que cet agresseur soit situé sur la même puce que le dispositif NFC ou à l'extérieur de cette puce.

Les communications NFC sont toutes basées sur une modulation d'amplitude. Ainsi, par exemple, en ce qui concerne la transmission d'informations depuis un lecteur vers un dispositif se comportant par exemple comme une étiquette ou un dispositif émulé en mode carte, la modulation d'amplitude est fournie par le modulateur d'amplitude du lecteur.

Par contre, lors de la transmission d'information depuis l'étiquette ou le dispositif émulé en mode carte, la modulation d'amplitude est obtenue par une modulation de la charge connectée à l'antenne de l'étiquette ou du dispositif émulé en mode carte.

En conséquence, le signal voulu (signal utile) se situe toujours dans les deux harmoniques latérales (à gauche et à droite de l'harmonique principale qui est centrée sur la fréquence de la porteuse). Et, lorsqu'un bruit provenant d'un agresseur se situe fréquentiellement dans l'une des harmoniques latérales, il affecte le signal désiré.

Différents aspects, modes de réalisation et de mise en œuvre de l'invention sont définis dans les revendications.

Ainsi, selon un mode de mise en œuvre et de réalisation, il est proposé d'atténuer (dans le domaine fréquentiel) les émissions de bruit attaquant la victime NFC en appliquant une dispersion (« dithering », en langue anglaise).

Mais, pour éviter d'atténuer également le signal désiré, il est proposé selon ce mode de mise en œuvre et de réalisation, d'appliquer une dispersion synchrone (« synchronous dithering ») du côté émetteur et du côté récepteur (lecteur et étiquette par exemple).

Ainsi, les émissions de bruit sont atténuées sans atténuer le signal désiré. Il en résulte une réduction de l'énergie de la fréquence du bruit qui se situe dans et pollue l'harmonique latérale contenant le signal utile. De ce fait, on filtre l'émission de bruit sans filtrer le signal désiré.

Selon un aspect, il est proposé un procédé de communication sans contact d'information entre un premier dispositif et un deuxième dispositif possédant respectivement deux antennes couplées par champ magnétique proche.

La communication est avantageusement une communication champ proche du type NFC.

Le procédé selon cet aspect comprend
au sein du premier dispositif (qui se comporte alors comme un dispositif émetteur), une génération d'un flot de données numériques correspondant aux informations à transmettre et une génération, à partir de ce flot et d'une application d'une première dispersion (dithering), d'un premier signal modulé en amplitude et dispersé (dithered) au niveau de l'antenne du premier dispositif, et
au sein du deuxième dispositif (qui se comporte alors comme un dispositif récepteur) une transposition de fréquence d'un deuxième signal modulé en amplitude dispersé (dithered) issu du premier signal, avec application d'une deuxième dispersion (dithering) synchrone de ladite première dispersion.

Selon un mode de mise en œuvre, l'application de la première dispersion est mise en œuvre par un premier circuit, l'application de la deuxième dispersion est mise en œuvre par un deuxième circuit.

Une façon particulièrement simple d'obtenir des dispersions synchrones comporte l'utilisation de deux circuits structurellement identiques présentant des états initiaux identiques.

A titre d'exemple, on peut prévoir que chacun des premiers et deuxièmes circuits comprenne un générateur d'une séquence binaire pseudo aléatoire et des moyens de retard configurables par ladite séquence binaire pseudo aléatoire, ces moyens de retard possédant une entrée pour recevoir un signal d'entrée du circuit et une sortie pour délivrer le signal de sortie dispersé (dithered).

Et, le générateur de séquence binaire pseudo aléatoire peut comporter classiquement un ensemble de bascules. Dans ce cas, les états initiaux du circuit comportent les valeurs initiales des bascules.

Selon l'invention, l'application de ladite deuxième dispersion (c'est-à-dire en réception) comprend une génération d'un signal d'horloge initial, une application de la deuxième dispersion sur le signal d'horloge initial de façon à obtenir un signal d'horloge dispersé et ladite transposition de fréquence est alors effectuée en utilisant le signal d'horloge dispersé en tant que signal de transposition de fréquence.

En émission, et notamment lorsque le premier dispositif est une étiquette (« tag ») ou bien un téléphone mobile cellulaire émulé en mode carte par exemple, la génération du premier signal modulé et dispersé comprend, selon un mode de mise en œuvre, l'application de ladite première dispersion sur le flot de données numériques de façon à obtenir un flot dispersé et une modulation de l'impédance d'une charge connectée aux bornes de l'antenne du premier dispositif avec ledit flot dispersé.

En émission, lorsque le premier dispositif est par exemple un lecteur, la génération du premier signal modulé dispersé comprend l'application de ladite première dispersion sur un signal d'horloge de façon à obtenir un signal d'horloge dispersé, une conversion numérique analogique du flot de données numériques en utilisant comme signal d'horloge de conversion ledit signal d'horloge dispersé.

Selon un autre aspect, il est proposé un système de communication sans contact d'informations entre un premier dispositif et un deuxième dispositif possédant respectivement deux antennes destinées à être couplées par champ magnétique proche, comprenant
au sein du premier dispositif, une chaîne d'émission comportant des premiers moyens configurés pour générer un flot de données numériques correspondant aux informations à transmettre et des deuxièmes moyens configurés pour générer, à partir de ce flot et d'une application d'une première dispersion, un premier signal modulé en amplitude et dispersé au niveau de l'antenne du premier dispositif,
au sein du deuxième dispositif, une chaîne de réception comportant des troisièmes moyens configurés pour effectuer une transposition de fréquence d'un deuxième signal modulé en amplitude et dispersé, issu du premier signal, avec application d'une deuxième dispersion synchrone de ladite première dispersion.

Selon un mode de réalisation,
les deuxièmes moyens comprennent un premier circuit configuré pour recevoir un premier signal d'entrée et mettre en œuvre l'application de la première dispersion sur le premier signal d'entrée de façon à délivrer un premier signal de sortie dispersé, et
les troisièmes moyens comprennent un deuxième circuit configuré pour recevoir un deuxième signal d'entrée et mettre en œuvre l'application de la deuxième dispersion sur le deuxième signal d'entrée de façon à délivrer un deuxième signal de sortie dispersé.

Selon un mode de réalisation, les deux circuits sont structurellement identiques et présentent des états initiaux identiques.

Selon un mode de réalisation, les troisièmes moyens comprennent
un générateur configuré pour générer un signal d'horloge initial formant le signal d'entrée pour le deuxième circuit qui délivre alors un signal d'horloge dispersé en tant que signal de sortie dispersé, et
un étage de transposition de fréquence possédant une entrée de signal pour recevoir le deuxième signal modulé en amplitude et dispersé et une entrée de transposition pour recevoir le signal d'horloge dispersé en tant que signal de transposition de fréquence.

Selon un mode de réalisation applicable par exemple lorsque le dispositif est une étiquette, l'entrée du premier circuit est connectée à la sortie des premiers moyens et les deuxièmes moyens comprennent des moyens de modulation configurés pour effectuer une modulation de l'impédance d'une charge connectée aux bornes de l'antenne du premier dispositif avec le premier signal de sortie dispersé.

Selon un mode de réalisation applicable par exemple lorsque le dispositif est un lecteur, les deuxièmes moyens comprennent
un générateur d'un signal d'horloge, l'entrée du premier circuit est connectée à la sortie du générateur du signal d'horloge de façon à délivrer un signal d'horloge dispersé,
un étage de conversion numérique analogique possédant une entrée de signal connectée à la sortie des premiers moyens et une entrée d'horloge connectée à la sortie du premier circuit, et
un étage de modulation d'amplitude connecté à la sortie de l'étage de conversion numérique analogique.

Bien entendu, le deuxième dispositif peut également comprendre une chaîne de transmission telle que définie ci-avant et le premier dispositif peut également comprendre une chaîne de réception telle que définie ci-avant.

En d'autres termes, chacun de ces deux dispositifs peut être équipé d'une chaîne de transmission et d'une chaîne de réception de façon à permettre un échange bidirectionnel d'informations.

Chacun des premier et deuxième dispositifs peut être un dispositif NFC.

Selon un autre aspect, il est proposé un dispositif de communication sans contact possédant une antenne destinée à être couplée par champ magnétique proche à une antenne d'un autre dispositif de communication sans contact, comprenant une chaîne d'émission comportant des premiers moyens configurés pour générer un flot de données numériques correspondant à des informations à transmettre et des deuxièmes moyens configurés pour générer au niveau de ladite antenne, à partir de ce flot et d'une application d'une première dispersion, un premier signal modulé en amplitude et dispersé.

Selon un mode de réalisation, les deuxièmes moyens comprennent un premier circuit configuré pour recevoir un premier signal d'entrée et mettre en œuvre l'application de la première dispersion sur le premier signal d'entrée de façon à délivrer un premier signal de sortie dispersé.

Selon un mode de réalisation, lorsque le dispositif est par exemple une étiquette ou un téléphone mobile cellulaire émulé en mode carte, l'entrée du premier circuit est connectée à la sortie des premiers moyens et les deuxièmes moyens comprennent des moyens de modulation configurés pour effectuer une modulation de l'impédance d'une charge connectée aux bornes de l'antenne avec le premier signal de sortie dispersé.

Selon un mode de réalisation, lorsque le dispositif est par exemple un lecteur, les deuxièmes moyens comprennent
un générateur d'un signal d'horloge, l'entrée du premier circuit est connectée à la sortie du générateur du signal d'horloge de façon à délivrer un signal d'horloge dispersé,
un étage de conversion numérique analogique possédant une entrée de signal connectée à la sortie des premiers moyens et une entrée d'horloge connectée à la sortie du premier circuit, et
un étage de modulation d'amplitude connecté à la sortie de l'étage de conversion numérique analogique.

Selon un autre aspect, il est proposé un dispositif de communication sans contact possédant une antenne destinée à être couplée par champ magnétique proche à une antenne d'un autre dispositif de communication sans contact au niveau de laquelle est susceptible d'être généré un premier signal modulé en amplitude et dispersé contenant des informations à transmettre, ledit dispositif comprenant une chaîne de réception comportant des moyens de traitement configurés pour effectuer une transposition de fréquence d'un deuxième signal modulé en amplitude et dispersé, issu du premier signal, avec application d'une deuxième dispersion synchrone d'une première dispersion appliquée au sein dudit autre dispositif.

Selon un mode de réalisation, les moyens de traitement comprennent un deuxième circuit configuré pour recevoir un deuxième signal d'entrée et mettre en œuvre l'application de la deuxième dispersion sur le deuxième signal d'entrée de façon à délivrer un deuxième signal de sortie dispersé.

Selon un mode de réalisation, que le dispositif soit par exemple un lecteur ou une étiquette, les moyens de traitement comprennent
un générateur configuré pour générer un signal d'horloge initial formant le signal d'entrée pour le deuxième circuit délivrant un signal d'horloge dispersé en tant que signal de sortie dispersé, et
un étage de transposition de fréquence possédant une entrée de signal pour recevoir le deuxième signal modulé en amplitude et dispersé et une entrée de transposition pour recevoir le signal d'horloge dispersé en tant que signal de transposition de fréquence.

D'autres avantages et caractéristiques de l'invention apparaîtront à l'examen de la description détaillée de modes de mise en œuvre et de réalisation, nullement limitatifs, et des dessins annexés sur lesquels :

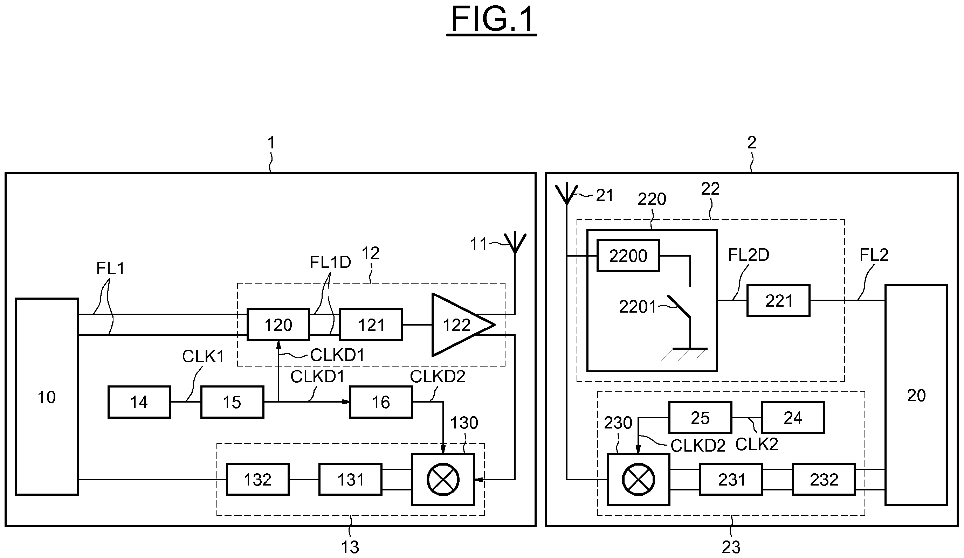

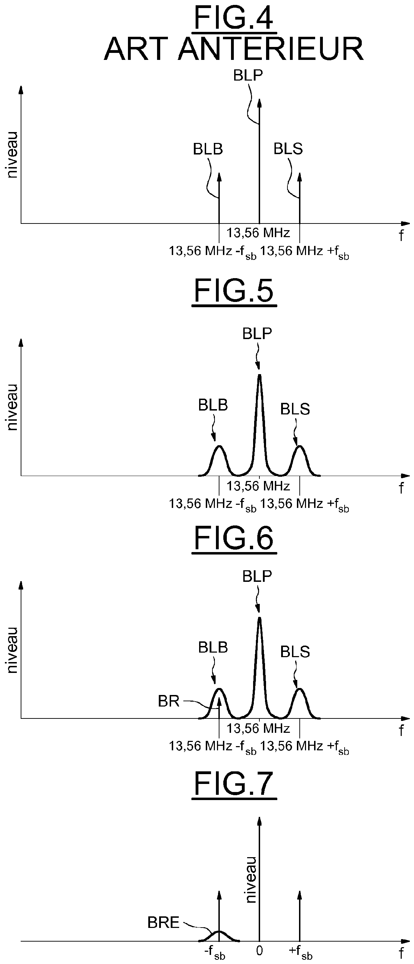

- les figures 1 à 3 et 5 à 11 sont relatives à des modes de mise en œuvre et de réalisation de l'invention tandis que la figure 4 est relative à l'art antérieur.

Sur la figure 1, la référence 1 désigne un lecteur, par exemple mais non limitativement un téléphone mobile cellulaire émulé en mode lecteur ou bien un lecteur classique de carte à puce sans contact ou d'étiquette (tag) tel qu'un badge.

La référence 2 désigne un deuxième dispositif, par exemple un téléphone mobile cellulaire émulé en mode carte et plus généralement un transpondeur électromagnétique (tag) tel qu'une étiquette ou un badge.

Ces deux dispositifs, qui sont des dispositifs NFC, forment un système de communication sans contact permettant d'effectuer une communication champ proche du type NFC entre les deux dispositifs.

A cet égard, le lecteur 1 possède une antenne 11 et l'étiquette 2 possède une antenne 21, ces deux antennes étant destinées à être couplées par champ magnétique proche généré par le lecteur.

Le lecteur 1 comprend une chaîne de transmission 12 connectée entre un module de traitement numérique 10, par exemple un processeur, et l'antenne 11.

La chaîne de transmission 12 comporte des premiers moyens, incorporés par exemple au sein du processeur 10, configurés pour générer un flot de données numériques FL1 correspondant aux informations à transmettre à l'étiquette 2. Comme il est classique en la matière, chaque information du flot FL1 comporte deux coefficients destinés à alimenter les deux voies d'entrée (I et Q) du modulateur 121.

Après transposition montante de fréquence effectuée dans le modulateur 121 et sommation des voies I et Q, le signal de sortie du modulateur 121 est délivré à un amplificateur 122 connecté à l'antenne 11.

La chaîne d'émission 12 comporte également un étage de conversion numérique analogique 120 recevant en entrée le flot FL1 et cadencé par un signal d'horloge dispersé (dithered) CLKD1.

Comme on va le voir maintenant, la chaîne de transmission du lecteur comporte des deuxièmes moyens configurés pour générer, à partir de ce flot FL1, et d'une application d'une première dispersion (dithering) un premier signal modulé en amplitude et dispersé (dithered) au niveau de l'antenne 11 du lecteur.

A cet égard, les deuxièmes moyens comprennent un générateur 14 configuré pour générer un signal d'horloge CLK1 et un premier circuit 15 configuré pour mettre en œuvre l'application de la première dispersion sur le signal d'horloge CLK1 de façon à délivrer le signal d'horloge dispersé (dithered) CLKD1.

A titre indicatif, la fréquence du signal d'horloge CLK1 et du signal d'horloge dispersé CLKD1 peut être de l'ordre de quelques centaines de Mhz.

Pour recevoir les informations transmises par le lecteur, l'étiquette 2 comporte une chaîne de réception 23 connectée entre l'antenne 21 et un bloc de traitement numérique 20, par exemple également un processeur.

Comme on va le voir ci-après, cette chaîne de réception 23 comporte des troisièmes moyens configurés pour effectuer une transposition de fréquences descendante d'un deuxième signal modulé en amplitude et dispersé, issu du premier signal modulé en amplitude et dispersé (qui est présent au niveau de l'antenne 12 du lecteur) et ce avec application d'une deuxième dispersion (dithering) synchrone de la première dispersion.

A cet égard, les troisièmes moyens comprennent un générateur 24 configuré pour générer un signal d'horloge initial CLK2 et un deuxième circuit 25 structurellement identique au premier circuit 15 et configuré pour délivrer un signal d'horloge dispersé CLKD2.

Dans le cas d'une transmission du type NFC, la fréquence du signal d'horloge CLK2 et la fréquence du signal d'horloge dispersé CLKD2 est typiquement égale à 13,56 Mhz.

Les troisièmes moyens comportent également un étage de transposition de fréquence 230 possédant une entrée de signal connectée à l'antenne 21 et destinée à effectuer une transposition de fréquence descendante du deuxième signal modulé en amplitude et dispersé en utilisant, comme signal de transposition de fréquence (signal d'oscillateur) le signal d'horloge dispersé CLKD2.

Après transposition de fréquence, les signaux présents sur les deux voies I et Q subissent un traitement classique de filtrage notamment dans un module 231 puis une conversion analogique numérique dans un étage de conversion analogique numérique 232.

Les données numériques correspondantes sont ensuite traitées par le processeur 20.

De façon à ce que les deux dispersions (dithering) effectuées d'une part côté lecteur et d'autre part côté étiquette, soient synchrones, les deux circuits 15 et 25 destinés à mettre en œuvre ces deux dispersions sont par exemple structurellement identiques et présentent des états initiaux identiques.

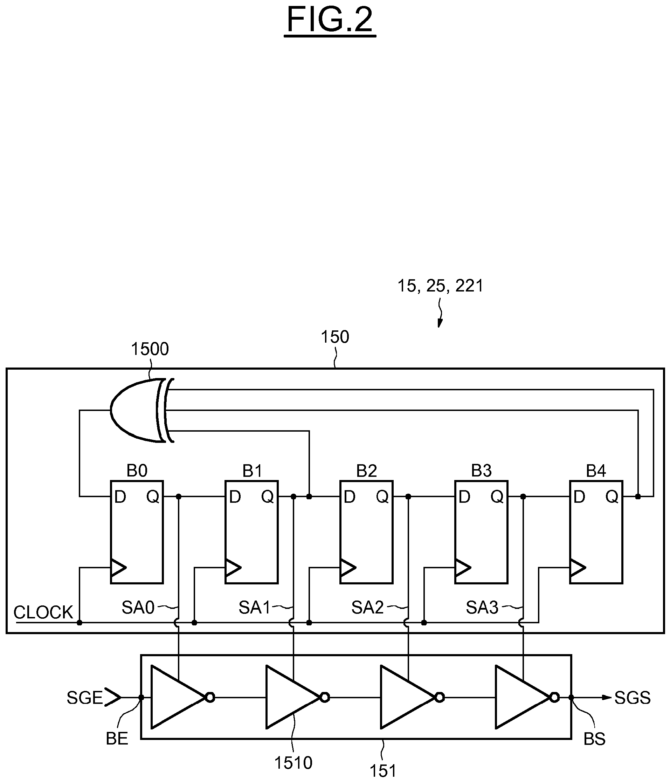

A cet égard, on pourra par exemple utiliser un circuit 15 et 25 du type de celui illustré sur la figure 2.

Plus particulièrement, le circuit, 15, 25, comporte un générateur 150 configuré pour générer une séquence binaire pseudo aléatoire. Une tel générateur est connu par l'homme du métier sous l'acronyme anglosaxon « PRBS (Pseudo Random Binary Sequence) generator ».

Il comporte une série de bascules D, ici cinq bascules chaînées B0-B4 dont les sorties Q de certaines d'entre elles sont reliées aux entrées d'une porte logique OU EXCLUSIF 1500. La sortie de la porte logique 1500 est rebouclée sur l'entrée D de la première bascule B0 de la chaîne.

Chaque bascule est commandée par un signal d'horloge référencé CLOCK et chaque sortie Q d'une bascule de la chaîne exceptée la dernière, délivre un signal d'activation binaire SA0-SA3.

Le circuit 15, 25 comprend par ailleurs des moyens de retard 151 comportant ici une chaîne d'inverseurs 1510.

L'entrée BE de ces moyens de retard est destinée à recevoir un signal d'entrée SGE et la sortie BS de la chaîne est destinée à délivrer un signal de sortie dispersé SGS.

Les moyens de retard 151 sont configurables par les signaux d'activation SA0-SA3. Plus précisément, chaque signal d'activation commande par exemple un multiplexeur destiné, en fonction de la valeur de signal d'activation à court-circuiter ou non l'inverseur correspondant dans la chaîne d'inverseur.

Ainsi, la séquence pseudo aléatoire SA0-SA3 permet de court-circuiter ou non de façon pseudo aléatoire les inverseurs de la chaîne de façon à obtenir un retard pseudo aléatoire, ce qui permet d'obtenir effectivement en sortie un signal dispersé (dithered).

Les états initiaux du circuit 15, 25 sont ici les valeurs initiales des bascules B0-B4.

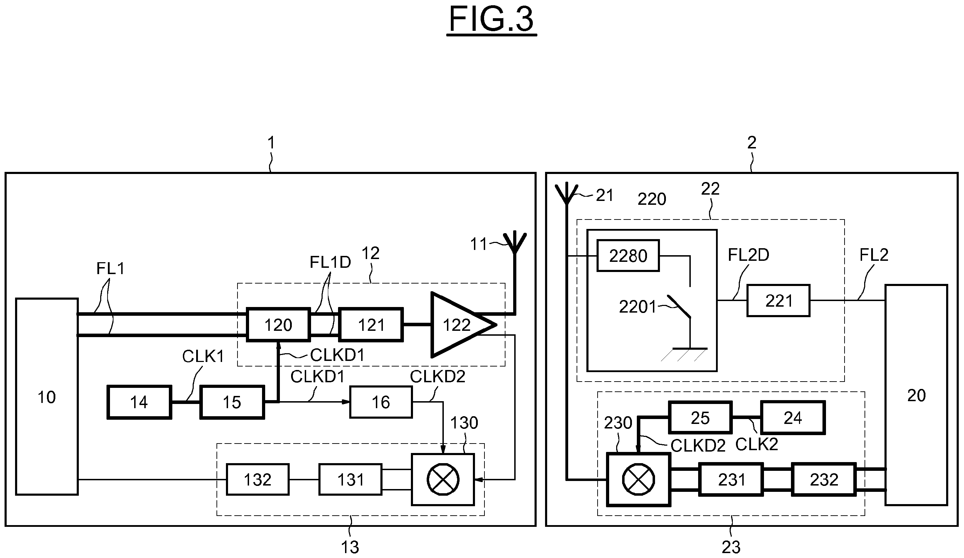

On se réfère maintenant plus particulièrement aux figures 3 à 7 pour illustrer un mode de fonctionnement du système de la figure 1 dans le cas d'une communication du lecteur 1 vers l'étiquette 2.

Sur la figure 3, les traits en gras illustrent les différentes étapes du procédé de communication ainsi que les différents éléments mis en œuvre dans ce mode de fonctionnement.

Pour la communication d'information du lecteur 1 vers l'étiquette 2, le lecteur 1 génère au niveau de l'antenne 11, via la chaîne d'émission 12, un signal modulé en amplitude qui va être communiqué à l'étiquette 2 par l'intermédiaire du couplage magnétique entre les antennes 11 et 21.

Dans l'art antérieur, c'est-à-dire en absence de dispersion appliquée au niveau de la chaîne d'émission, le signal qui est communiqué est, comme illustré sur la figure 4, un signal modulé en amplitude qui comporte une harmonique principale (porteuse) centrée sur la fréquence de 13,56 Mhz et deux harmoniques latérales BLB et BLS respectivement centrées sur la fréquence 13,56 Mhz-fsb et 13,56 Mhz+fsb.

Europay Mastercard Visa, abrégé par le sigle EMV, est un standard international de sécurité des cartes de paiement du type carte à puce initié par le consortium EMVCo. La majeure partie, voire l'intégralité des cartes bancaires à puce sont conformes au standard EMV de même que la majeure partie voire l'ensemble du parc des terminaux de paiement électroniques. Les différents livres regroupant les spécifications du standard EMV, en particulier la version 2.3 de novembre 2011, sont disponibles auprès du consortium EMVCo.

Le protocole de communication pour la norme EMV sans contact est principalement basé sur le protocole décrit dans la norme ISO/IEC 14443.

Selon le consortium EMVCO et la norme ISO/IEC14443, la valeur de fsb est égale à 106 kbits/seconde pour une communication lecteur vers étiquette et peut être égale à 106, 212, 424 ou 848 kbits/seconde pour une communication de l'étiquette vers le lecteur.

Un bruit parasite qui se superposerait (dans le domaine fréquentiel) sur la raie latérale BLB ne pourrait pas être filtré car dans ce cas on filtrerait également le signal désiré c'est-à-dire les informations transmises.

C'est la raison pour laquelle, de façon à atténuer l'impact de ce bruit sur la communication, on applique des dispersions (dithering) synchrones côté lecteur et côté étiquette.

Plus précisément, avant la génération et l'émission du signal modulé en amplitude, la dispersion est appliquée sur le signal d'horloge CLK1 de façon à obtenir le signal d'horloge dispersé CLKD1 qui est délivré à l'étage de conversion numérique analogique 120.

Le flot FL1D délivré par cet étage de conversion numérique analogique est par conséquent dispersé (dithered) et le signal modulé en amplitude qui en résulte et qui va être transmis est également dispersé. Ce signal est illustré schématiquement dans le domaine fréquentiel sur la figure 5. On remarque que toutes les bandes BLB, BLP, BLS ont été étalées.

On suppose maintenant, comme illustré sur la figure 6, que le signal modulé en amplitude et dispersé est soumis à un bruit BR durant l'émission, ce bruit BR se situant dans la bande latérale BLB.

Au niveau de la réception, le signal modulé en amplitude, dispersé et bruité, reçu au niveau de l'antenne 21, subit une transposition de fréquence descendante dans l'étage de transposition 230 en utilisant le signal d'horloge dispersé CLKD2 comme signal d'oscillateur.

Puisque les deux dispersions respectivement appliquées au niveau du lecteur et au niveau de l'étiquette sont synchrones, l'impact de cette dispersion est supprimé sur le signal modulé en amplitude parce que les phases relatives des signaux d'horloge CLKD1 et CLKD2 utilisées en émission et en réception est constante. Et, le bruit BR va être alors dispersé pour la première fois uniquement au niveau réception, c'est-à-dire dans l'étiquette 2. Par conséquent, comme illustré sur la figure 7, son spectre est étalé et l'amplitude de ce bruit étalé BRE est ainsi réduite. On a donc bien effectué une atténuation de bruit sans utiliser de filtrage.

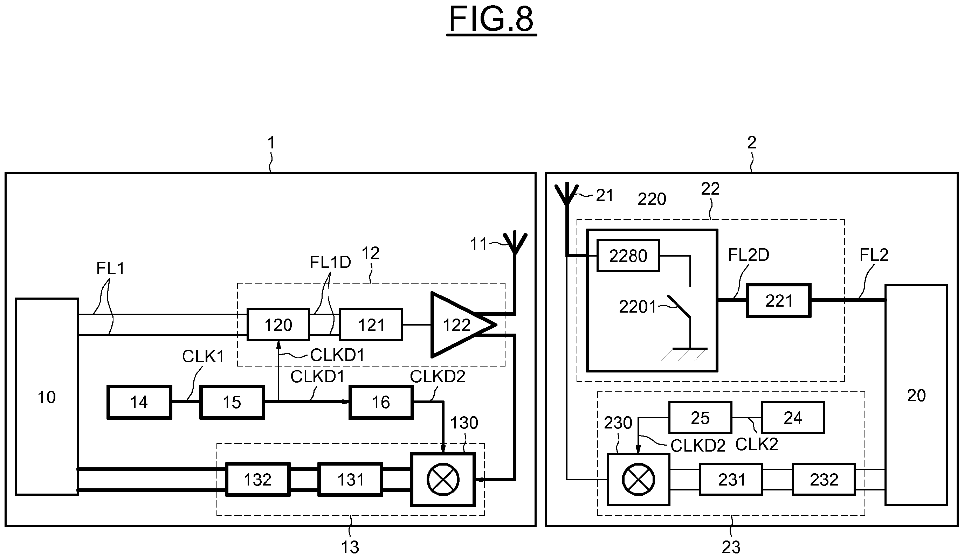

On se réfère maintenant plus particulièrement aux figures 8 à 11, pour illustrer un mode de fonctionnement du système de la figure 1 lors d'une communication depuis l'étiquette 2 vers le lecteur 1.

A cet égard, comme illustré sur la figure 1, l'étiquette 2 comporte également une chaîne d'émission 22 comportant un circuit 220 configuré pour appliquer une première dispersion (dithering) sur un flot FL2 d'informations délivré par le processeur 20 et à transmettre au lecteur. La structure et les états initiaux du circuit 220 sont analogues à la structure et aux états initiaux du circuit 15 et du circuit 25. Le circuit 221 délivre donc un flot d'informations dispersé (dithered) FL2D.

La chaîne d'émission 22 comporte également un circuit 220 comportant une charge 2200 connectée aux bornes de l'antenne 21 par l'intermédiaire d'un interrupteur 2201 commandable. En pratique, l'antenne 21 comporte un circuit résonnant inductif capacitif et le circuit 220 va permettre de modifier, via l'interrupteur 2201, l'impédance de la charge connectée aux bornes de l'antenne de l'objet de façon à réaliser une modulation de charge.

Pour effectuer la transmission des informations de l'étiquette 2 vers le lecteur 1, le lecteur génère via son antenne 12 un champ magnétique non modulé en amplitude, qui est dans les communications NFC une onde sinusoïdale à 13,56 Mhz ayant une amplitude comprise entre 0,5 et 7,5 ampères/mètre.

De l'autre côté, l'antenne 21 module le champ généré par le lecteur. Cette modulation est, comme indiqué ci-avant, effectuée en modifiant la charge connectée aux bornes de l'antenne 21. Il en résulte un changement dans les amplitudes des tensions et courant présents au niveau des antennes 21 et 11.

Une copie de ce courant circulant dans l'antenne 11 est générée de façon à l'injecter dans la chaîne de réception 13 du lecteur où il est démodulé et traité de façon à extraire les informations transmises.

Il s'agit en effet là encore d'un signal modulé en amplitude car la variation de charge effectuée lors de la modulation de charge par le circuit 220 se traduit par une modulation d'amplitude et de phase du signal (tension de courant) au niveau de l'antenne 21 et au niveau de l'antenne 11.

La chaîne de réception 13 du lecteur comporte par conséquent un étage 130 de transposition de fréquence descendante recevant sur son entrée de signal la copie du courant circulant dans l'antenne 11 et sur son entrée de transposition un signal d'horloge dispersé CLKD2 qui sert de signal de transposition (signal d'oscillateur).

A cet égard, on peut considérer que les troisièmes moyens de la chaîne de réception configurée pour effectuer la transposition de fréquence avec application d'une deuxième dispersion synchrone de celle qui est effectuée dans l'étiquette, comprenne également le circuit 15 qui fournit le signal d'horloge dispersé CLKD1, ainsi qu'un diviseur de fréquence 16 qui délivre à partir du signal CLKD1 ayant une fréquence de l'ordre de quelques centaines de Mhz, le signal d'horloge dispersé CLKD2 ayant la fréquence de 13,56 Mhz.

Après transposition de fréquence, les deux voies I et Q sont traitées dans un bloc 131 comportant classiquement notamment des filtres puis les signaux analogique délivrés par le bloc 131 sont convertis en informations numériques dans un étage 132 de conversion analogique/numérique.

Ces informations numériques sont envoyées au processeur 10 pour traitement.

Ainsi, en l'absence de dispersion effectuée par le circuit 221 de l'étiquette 2, le signal modulé en amplitude présent à l'antenne 21 et à l'antenne 11 présenterait le spectre illustré sur la figure 4.

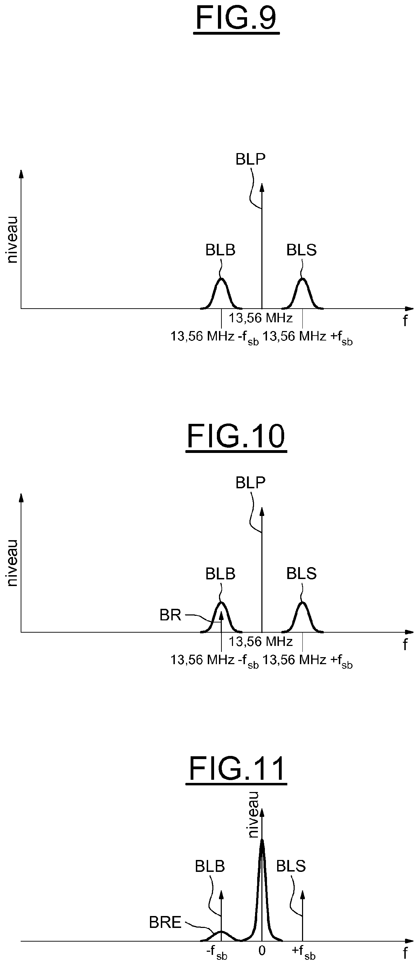

Par contre, puisque la modulation de charge effectuée par le circuit 220 utilise le flot d'informations dispersé FL2D pour commander l'interrupteur 2201, le spectre fréquentiel du signal communiqué au lecteur est celui illustré sur la figure 9 dans lequel les bandes latérales BLB et BLS ont été étalées.

On suppose ensuite là encore que lors de la communication, un bruit BR vient se localiser (dans le domaine fréquentiel) dans la bande latérale BLB.

Au niveau du lecteur, qui agit donc ici en tant que récepteur, on procède à la transposition de fréquence avec le signal de transposition dispersé CLKD2 et l'on obtient alors le spectre du signal transposé illustré sur la figure 11.

Les deux dispersions synchrones effectuées respectivement au niveau de l'étiquette et au niveau du lecteur (récepteur) permettent de retirer l'impact de la dispersion sur les bandes latérales BLB et BLS car les phases relatives des signaux FL2D et CLKD2 sont constantes. Cependant, puisque le bruit BR, de même que l'harmonique principale BLP subissent la dispersion pour la première fois dans le récepteur, le spectre BRE du bruit est étalé de même que celui de l'harmonique principale.

Par conséquent, là encore, le niveau de bruit est réduit et on a donc bien effectué une atténuation de bruit sans filtrage.

A titre d'exemple, en utilisant comme circuit de dispersion un circuit du type de celui illustré sur la figure 2 avec une séquence pseudo aléatoire de longueur 16, et un retard de 125 picosecondes capable d'être appliqué par chaque inverseur, on obtient une réduction de bruit de 11,2 dB ce qui correspond à une réduction de la puissance du bruit d'un facteur 10.

## Revendications

1. Procédé de communication sans contact d'informations entre un premier dispositif (1, 2) et un deuxième dispositif (2, 1) possédant respectivement deux antennes couplées par champ magnétique proche, comprenant
au sein du premier dispositif (1, 2), une génération d'un flot (FL1, FL2) de données numériques correspondant aux informations à transmettre et une génération, à partir de ce flot et d'une application d'une première dispersion, d'un premier signal modulé en amplitude et dispersé au niveau de l'antenne du premier dispositif, la génération du premier signal modulé et dispersé comprenant l'application de ladite première dispersion sur un signal d'horloge (CLK1) de façon à obtenir un signal d'horloge dispersé (CLKD1), une conversion numérique analogique (120) du flot de données numériques en utilisant comme signal d'horloge de conversion ledit signal d'horloge dispersé (CLKD1), et
au sein du deuxième dispositif (2, 1), une transposition de fréquence (230, 130) d'un deuxième signal modulé en amplitude et dispersé, issu du premier signal, avec application d'une deuxième dispersion synchrone de ladite première dispersion, l'application de ladite deuxième dispersion comprenant une génération d'un signal d'horloge initial (CLK1, CLK2), une application de la deuxième dispersion sur le signal d'horloge initial de façon à obtenir un signal d'horloge dispersé (CLKD2) et ladite transposition de fréquence étant effectuée en utilisant le signal d'horloge dispersé (CLKD2) en tant que signal de transposition de fréquence.

2. Procédé selon la revendication 1, dans lequel l'application de la première dispersion est mise en œuvre par un premier circuit (15, 221), l'application de la deuxième dispersion est mise en œuvre par un deuxième circuit (15, 25), les deux circuits étant structurellement identiques et présentant des états initiaux identiques.

3. Procédé selon l'une des revendications précédentes, dans lequel la communication est une communication champ proche du type NFC.

4. Système de communication sans contact d'informations entre un premier dispositif (1, 2) et un deuxième dispositif (2, 1) possédant respectivement deux antennes (11, 21) destinées à être couplées par champ magnétique proche, comprenant
au sein du premier dispositif (1, 2), une chaîne de transmission (12, 22) comportant des premiers moyens configurés pour générer un flot de données numériques correspondant aux informations à transmettre et des deuxièmes moyens configurés pour générer, à partir de ce flot et d'une application d'une première dispersion, un premier signal modulé en amplitude et dispersé au niveau de l'antenne du premier dispositif, les deuxièmes moyens comprenant un premier circuit (15, 221) configuré pour recevoir un premier signal d'entrée et mettre en œuvre l'application de la première dispersion sur le premier signal d'entrée de façon à délivrer un premier signal de sortie dispersé, les deuxièmes moyens comprenant un générateur (14) d'un signal d'horloge (CLK1), l'entrée du premier circuit (15) étant connectée à la sortie du générateur du signal d'horloge de façon à délivrer un signal d'horloge dispersé (CLKD1), et un étage de conversion numérique analogique (120) possédant une entrée de signal connectée à la sortie des premiers moyens et une entrée d'horloge connectée à la sortie du premier circuit, et un étage de modulation d'amplitude (121) connecté à la sortie de l'étage de conversion numérique analogique (120)
au sein du deuxième dispositif (2, 1), une chaîne de réception (23, 13) comportant des troisièmes moyens configurés pour effectuer une transposition de fréquence d'un deuxième signal modulé en amplitude et dispersé, issu du premier signal, avec application d'une deuxième dispersion synchrone de ladite première dispersion, les troisièmes moyens comprenant un deuxième circuit (15, 25) configuré pour recevoir un deuxième signal d'entrée et mettre en œuvre l'application de la deuxième dispersion sur le deuxième signal d'entrée de façon à délivrer un deuxième signal de sortie dispersé, les troisièmes moyens comprenant un générateur (24, 14) configuré pour générer un signal d'horloge initial (CLK2, CLK1) formant le signal d'entrée pour le deuxième circuit (25, 15) délivrant un signal d'horloge dispersé en tant que signal de sortie dispersé et un étage de transposition de fréquence (230, 130) possédant une entrée de signal pour recevoir le deuxième signal modulé en amplitude et dispersé et une entrée de transposition pour recevoir le signal d'horloge dispersé (CLKD2) en tant que signal de transposition de fréquence.

5. Système selon la revendication 4, dans lequel les deux circuits (15, 25, 221) sont structurellement identiques et présentent des états initiaux identiques.

6. Système selon l'une des revendications 4 ou 5, dans lequel chacun des premier et deuxième circuits comprend un générateur d'une séquence binaire pseudo aléatoire (150), et des moyens de retard (151) configurables par ladite séquence binaire pseudo aléatoire, possédant une entrée (BE) pour recevoir le signal d'entrée (SGE) et une sortie (BS) pour délivrer le signal de sortie dispersé (SGS).

7. Système selon l'une des revendications 4 à 6, dans lequel le deuxième dispositif (2, 1) comprend également une chaîne de transmission (22, 12) définie dans l'une des revendications 4 à 6 et le premier dispositif (1, 2) comprend également une chaîne de réception (13, 23) définie dans l'une des revendications 4 à 6.

8. Système selon l'une des revendications 4 à 7, dans lequel chacun des premier et deuxième dispositifs (1, 2) est un dispositif NFC.

9. Dispositif de communication sans contact possédant
une antenne (21, 11) destinée à être couplée par champ magnétique proche à une antenne (11, 21) d'un autre dispositif de communication sans contact (1, 2) au niveau de laquelle est susceptible d'être généré un premier signal modulé en amplitude et dispersé contenant des informations à transmettre,
une chaîne de réception (23, 13) comportant des moyens de traitement configurés pour effectuer une transposition de fréquence (230, 130) d'un deuxième signal modulé en amplitude et dispersé, issu du premier signal, avec application d'une deuxième dispersion synchrone d'une première dispersion appliquée au sein dudit autre dispositif, les moyens de traitement comprenant un circuit (25, 15) configuré pour recevoir un signal d'entrée et mettre en œuvre l'application de la deuxième dispersion sur le signal d'entrée de façon à délivrer un signal de sortie dispersé, les moyens de traitement comprenant un générateur (24, 14) configuré pour générer un signal d'horloge initial formant le signal d'entrée pour le circuit délivrant un signal d'horloge dispersé en tant que signal de sortie dispersé et un étage de transposition de fréquence (230, 130) possédant une entrée de signal pour recevoir le deuxième signal modulé en amplitude et dispersé et une entrée de transposition pour recevoir le signal d'horloge dispersé (CLKD2) en tant que signal de transposition de fréquence.

10. Dispositif selon la revendication 9, formant un dispositif NFC.

## Patentansprüche

1. Kontaktloses Kommunikationsverfahren von Informationen zwischen einer ersten Vorrichtung (1, 2) und einer zweiten Vorrichtung (2, 1), die jeweils zwei Antennen besitzen, die durch ein magnetisches Nahfeld gekoppelt sind, umfassend
innerhalb der ersten Vorrichtung (1, 2) ein Generieren eines Stroms (FL1, FL2) an digitalen Daten entsprechend den zu übertragenden Informationen und ein Generieren ausgehend von diesem Strom und von einer Anwendung einer ersten Dispersion eines ersten amplitudenmodulierten und dispergierten Signals im Bereich der Antenne der ersten Vorrichtung, wobei das Generieren des ersten modulierten und dispergierten Signals das Anwenden der ersten Dispersion auf ein Taktsignal (CLK1) umfasst, um ein dispergiertes Taktsignal (CLKD1) zu erhalten, eine Digital-Analog-Wandlung (120) des Stroms an digitalen Daten unter Verwendung des dispergierten Taktsignals (CLKD1) als Wandlungstaktsignal, und
innerhalb der zweiten Vorrichtung (2, 1) eine Frequenzumsetzung (230, 130) eines zweiten amplitudenmodulierten und dispergierten Signals, aus dem ersten Signal stammend, mit Anwenden einer zweiten, mit der ersten Dispersion synchronen Dispersion, wobei das Anwenden der zweiten Dispersion ein Generieren eines anfänglichen Taktsignals (CLK1, CLK2), ein Anwenden der zweiten Dispersion auf das anfängliche Taktsignal, um ein dispergiertes Taktsignal (CLKD2) zu erhalten, umfasst, und die Frequenzumsetzung unter Verwendung des dispergierten Taktsignals (CLKD2) als Frequenzumsetzungssignal durchgeführt wird.

2. Verfahren nach Anspruch 1, wobei das Anwenden der ersten Dispersion durch eine erste Schaltung (15, 221) umgesetzt wird, das Anwenden der zweiten Dispersion durch eine zweite Schaltung (15, 25) umgesetzt wird, wobei die beiden Schaltungen strukturell identisch sind, und identische anfängliche Zustände aufweisen.

3. Verfahren nach einem der vorstehenden Ansprüche, wobei die Kommunikation eine Nahfeldkommunikation vom Typ NFC ist.

4. Kontaktloses Kommunikationssystem von Informationen zwischen einer ersten Vorrichtung (1, 2) und einer zweiten Vorrichtung (2, 1), die jeweils zwei Antennen (11, 21) besitzen, die dazu bestimmt sind, durch ein magnetisches Nahfeld gekoppelt zu werden, umfassend
innerhalb der ersten Vorrichtung (1, 2) eine Übertragungskette (12, 22), die erste Mittel beinhaltet, die konfiguriert sind, um einen Strom an digitalen Daten entsprechend den zu übertragenden Informationen generieren, und zweite Mittel, die konfiguriert sind, um ausgehend von diesem Strom und von einer Anwendung einer ersten Dispersion ein erstes amplitudenmoduliertes und dispergiertes Signal im Bereich der Antenne der ersten Vorrichtung zu generieren, wobei die zweiten Mittel eine erste Schaltung (15, 221) umfassen, die konfiguriert ist, um ein erstes Eingangssignal zu empfangen, und die Anwendung der ersten Dispersion auf das erste Eingangssignal umzusetzen, um ein erstes dispergiertes Ausgangssignal zu liefern, wobei die zweiten Mittel einen Generator (14) eines Taktsignals (CLK1) umfassen, wobei der Eingang der ersten Schaltung (15) mit dem Ausgang des Generators des Taktsignals verbunden ist, um ein dispergiertes Taktsignal (CLKD1) zu liefern, und eine Digital-Analog-Wandlungsstufe (120), die einen Signaleingang besitzt, der mit dem Ausgang der ersten Mittel verbunden ist, und einen Takteingang, der mit dem Ausgang der ersten Schaltung verbunden ist, und eine Amplitudenmodulationsstufe (121), die mit dem Ausgang der Digital-Analog-Wandlungsstufe (120) verbunden ist innerhalb der zweiten Vorrichtung (2, 1) eine Empfangskette (23, 13), die dritte Mittel beinhaltet, die konfiguriert sind, um eine Frequenzumsetzung eines zweiten amplitudenmodulierten und dispergierten Signals, aus dem ersten Signal stammend, mit Anwendung einer zweiten, mit der ersten Dispersion synchronen Dispersion durchzuführen, wobei die dritten Mittel eine zweite Schaltung (15, 25) umfassen, die konfiguriert ist, um ein zweites Eingangssignal zu empfangen, und die Anwendung der zweiten Dispersion auf das zweite Eingangssignal umzusetzen, um ein zweites dispergiertes Ausgangssignal zu liefern, wobei die dritten Mittel einen Generator (24, 14) umfassen, der konfiguriert ist, um ein anfängliches Taktsignal (CLK2, CLK1) zu generieren, das das Eingangssignal für die zweite Schaltung (25, 15), die ein dispergiertes Taktsignal als dispergiertes Ausgangssignal liefert, bildet, und eine Frequenzumsetzungsstufe (230, 130), die einen Signaleingang besitzt, um das zweite amplitudenmodulierte und dispergierte Signal zu empfangen, und einen Umsetzungseingang, um das dispergierte Taktsignal (CLKD2) als Frequenzumsetzungssignal zu empfangen.

5. System nach Anspruch 4, wobei die beiden Schaltungen (15, 25, 221) strukturell identisch sind und identische anfängliche Zustände aufweisen.

6. System nach einem der Ansprüche 4 oder 5, wobei jede der ersten und zweiten Schaltung einen Generator einer pseudozufälligen binären Sequenz (150), und Verzögerungsmittel (151) umfasst, die durch die pseudozufällige binäre Sequenz konfigurierbar sind, die einen Eingang (BE) besitzen, um das Eingangssignal (SGE) zu empfangen, und einen Ausgang (BS), um das dispergierte Ausgangssignal (SGS) zu liefern.

7. System nach einem der Ansprüche 4 bis 6, wobei die zweite Vorrichtung (2, 1) auch eine Übertragungskette (22, 12) umfasst, die in einem der Ansprüche 4 bis 6 definiert ist, und die erste Vorrichtung (1, 2) auch eine Empfangskette (13, 23) umfasst, die in einem der Ansprüche 4 bis 6 definiert ist.

8. System nach einem der Ansprüche 4 bis 7, wobei jede der ersten und zweiten Vorrichtung (1, 2) eine NFC-Vorrichtung ist.

9. Kontaktlose Kommunikationsvorrichtung, die Folgendes besitzt
eine Antenne (21, 11), die dazu bestimmt ist, durch ein magnetisches Nahfeld an eine Antenne (11, 21) einer anderen kontaktlosen Kommunikationsvorrichtung (1, 2) gekoppelt zu werden, im Bereich derer ein erstes amplitudenmoduliertes und dispergiertes Signal generiert werden kann, das zu übertragende Informationen enthält,
eine Empfangskette (23, 13), die Verarbeitungsmittel beinhaltet, die konfiguriert sind, um eine Frequenzumsetzung (230, 130) eines zweiten amplitudenmodulierten und dispergierten Signals, aus dem ersten Signal stammend, mit Anwenden einer zweiten, mit einer ersten Dispersion synchronen Dispersion durchzuführen, die innerhalb der anderen Vorrichtung angewendet wird, wobei die Verarbeitungsmittel eine Schaltung (25, 15) umfassen, die konfiguriert ist, um ein Eingangssignal zu empfangen, und die Anwendung der zweiten Dispersion auf das zweite Eingangssignal umzusetzen, um ein dispergiertes Ausgangssignal zu liefern, wobei die Verarbeitungsmittel einen Generator (24, 14) umfassen, der konfiguriert ist, um ein anfängliches Taktsignal zu generieren, das das Eingangssignal für die Schaltung, die ein dispergiertes Taktsignal als dispergiertes Ausgangssignal liefert, bildet, und eine Frequenzumsetzungsstufe (230, 130), die einen Signaleingang besitzt, um das zweite amplitudenmodulierte und dispergierte Signal zu empfangen, und einen Umsetzungseingang, um das dispergierte Taktsignal (CLKD2) als Frequenzumsetzungssignal zu empfangen.

10. Vorrichtung nach Anspruch 9, die eine NFC-Vorrichtung bildet.

## Claims

1. A method for contactless communication of information between a first device (1, 2) and a second device (2, 1) respectively having two antennas coupled by a near magnetic field, comprising
within the first device (1, 2), a generation of a stream (FL1, FL2) of digital data corresponding to the information to be transmitted and a generation, from this stream and an application of a first dispersion, of a first amplitude modulated and dispersed signal at the antenna of the first device, the generation of the first modulated and dispersed signal comprising the application of said first dispersion on a clock signal (CLK1) so as to obtain a dispersed clock signal (CLKD1), a digital to analog conversion (120) of the digital data stream using as a conversion clock signal said dispersed clock signal (CLKD1), and
within the second device (2, 1), a frequency transposition (230, 130) of a second amplitude modulated and dispersed signal, derived from the first signal, with application of a second synchronous dispersion of said first dispersion, the application of said second dispersion comprising the generation of an initial clock signal (CLK1, CLK2), an application of the second dispersion to the initial clock signal so as to obtain a dispersed clock signal (CLKD2) and said frequency transposition being performed using the dispersed clock signal (CLKD2) as a frequency transposition signal.

2. The method according to claim 1, wherein the application of the first dispersion is implemented by a first circuit (15, 221), the application of the second dispersion is implemented by a second circuit (15, 25), the two circuits being structurally identical and having identical initial states.

3. The method according to one of the preceding claims, wherein the communication is a near field communication of the NFC type.

4. A system for contactless communication of information between a first device (1, 2) and a second device (2, 1) respectively having two antennas (11, 21) intended to be coupled by a near magnetic field, comprising within the first device (1, 2), a transmission chain (12, 22) including first means configured to generate a digital data stream corresponding to the information to be transmitted and second means configured to generate, from this stream and an application of a first dispersion, a first amplitude modulated and dispersed signal at the antenna of the first device, the second means comprising a first circuit (15, 221) configured to receive a first input signal and implement the application of the first dispersion on the first input signal so as to output a first dispersed output signal, the second means comprising a clock signal (CLK1) generator (14), the input of the first circuit (15) being connected to the output of the clock signal generator so as to output a dispersed clock signal (CLKD1), and a digital to analog conversion stage (120) having a signal input connected to the output of the first means and a clock input connected to the output of the first circuit, and an amplitude modulation stage (121) connected to the output of the digital to analog conversion stage (120)
within the second device (2, 1), a reception chain (23, 13) including third means configured to perform a frequency transposition of a second amplitude modulated and dispersed signal, derived from the first signal, with application of a second synchronous dispersion of said first dispersion, the third means comprising a second circuit (15, 25) configured to receive a second input signal and to implement the application of the second dispersion on the second input signal so as to output a second dispersed output signal, the third means comprising a generator (24, 14) configured to generate an initial clock signal (CLK2, CLK1) forming the input signal for the second circuit (25, 15) outputting a dispersed clock signal as a dispersed output signal and a frequency transposition stage (230, 130) having a signal input for receiving the second amplitude modulated and dispersed signal and a transposition input for receiving the dispersed clock signal (CLKD2) as a frequency transposition signal.

5. The system according to claim 4, wherein the two circuits (15, 25, 221) are structurally identical and have identical initial states.

6. The system according to one of claims 4 or 5, wherein each of the first and second circuits comprises a generator of a pseudo-random binary sequence (150), and delay means (151) configurable by said pseudo-random binary sequence, having an input (BE) for receiving the input signal (SGE) and an output (BS) for outputting the dispersed output signal (SGS).

7. The system according to one of claims 4 to 6, wherein the second device (2, 1) also comprises a transmission chain (22, 12) defined in one of claims 4 to 6 and the first device (1, 2) also comprises a reception chain (13, 23) defined in one of claims 4 to 6.

8. The system according to one of claims 4 to 7, wherein each of the first and second devices (1, 2) is an NFC device.

9. A contactless communication device having an antenna (21, 11) intended to be coupled by a near magnetic field to an antenna (11, 21) of another contactless communication device (1, 2) at which a first amplitude modulated and dispersed signal containing information to be transmitted is capable of being generated, a reception chain (23, 13) including processing means configured to perform a frequency transposition (230, 130) of a second amplitude modulated and dispersed signal, derived from the first signal, with application of a second synchronous dispersion of a first dispersion applied within said other device, the processing means comprising a circuit (25, 15) configured to receive an input signal and implement the application of the second dispersion to the input signal so as to output a dispersed output signal, the processing means comprising a generator (24, 14) configured to generate an initial clock signal forming the input signal for the circuit outputting a dispersed clock signal as a dispersed output signal and a frequency transposition stage (230, 130) having a signal input for receiving the second amplitude modulated and dispersed signal and a transposition input for receiving the dispersed clock signal (CLKD2) as a frequency transposition signal.

10. The device according to claim 9, forming an NFC device.
